(19) Europäisches Patentamt
European Patent Office
Office européen des brevets

(11) Numéro de publication : **0 313 419 B1**

# (12) FASCICULE DE BREVET EUROPEEN

(45) Date de publication du fascicule du brevet : **27.11.91 Bulletin 91/48**

(51) Int. Cl.$^5$ : **C07F 3/12,** A61K 31/305, A61K 31/80

(21) Numéro de dépôt : **88402210.4**

(22) Date de dépôt : **02.09.88**

## (54) Nouveaux dérivés mercuriels organiques à caractère antiseptique.

Le dossier contient des informations techniques présentées postérieurement au dépôt de la demande et ne figurant pas dans le présent fascicule.

(30) Priorité : **08.10.87 FR 8714157**

(43) Date de publication de la demande : **26.04.89 Bulletin 89/17**

(45) Mention de la délivrance du brevet : **27.11.91 Bulletin 91/48**

(84) Etats contractants désignés : **BE CH DE ES FR GB IT LI SE**

(56) Documents cités :
**EP-A- 0 116 489**
**FR-A- 2 119 066**
**JOURNAL OF ORGANOMETALLIC CHEMISTRY, vol. 225, 1982, pages 43-56, Elsevier Sequoia S.A., Lausanne, CH; G.A. RUSSEL et al.: "Nucleophilic substitution in organomercury halides by a free radical chain process"**

(56) Documents cités :
**JOURNAL OF THE CHEMICAL SOCIETY, PERKIN TRANSACTIONS 1, 1975, pages 2465-2471, Letchworth, GB; A. LETHBRIDGE et al.: "Neighbouring-group effects in the oxidation of olefins by mercury(11), thallium(111), and lead(IV) acetates"**
**TETRAHEDRON LETTERS, vol. 29, no. 37, 1988, pages 4687-4690, Pergamon Press Plc, Oxford, GB; R.C. LAROCK et al.: "Synthesis of benzofurans via palladium-promoted cyclization of ortho-substituted aryl allyl ethers"**

(73) Titulaire : **INSTITUT TEXTILE DE FRANCE**
**35, rue des Abondances, B.P. 79**
**F-92105 Boulogne-Billancourt Cédex (FR)**

(72) Inventeur : **Bourgeois, Michel**
**13, rue de Montbrillant**
**F-69003 Lyon (FR)**
Inventeur : **Chatelin, Roger**
**36, allée des Monts d'or Domaine de Bois Dieu**
**F-69380 Lissieu (FR)**
Inventeur : **Wattiez, Daniel**
**4, allée du Bois d'Ars Domaine de Bois Dieu**
**F-69380 Lissieu (FR)**

(74) Mandataire : **Descourtieux, Philippe et al**
**CABINET BEAU de LOMENIE 55 rue d'Amsterdam**
**F-75008 Paris (FR)**

EP 0 313 419 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne de nouveaux dérivés mercuriels, organiques qui possèdent des caractéristiques antiseptiques.

On connaît bon nombre de dérivés de ce type, couramment utilisés, parmi lesquels le mercurobutol, le mercurophène, le mercurosal, le mercurochrome.

On a déjà décrit, notamment dans le brevet français N°8300442, des dérivés du mercurobutol utilisés pour la protection de supports notamment textiles. Ces dérivés comportaient un groupement fonctionnel lié au noyau phénolique du mercurobutol, ledit groupement étant capable d'intervenir dans une réaction de polymérisation ou de polyaddition ; ils avaient les propriétés bioactives du mercurobutol. Parmi les groupements fonctionnels, on citait les groupements allyliques, vinyliques ou acryliques.

Mais on a constaté que la présence du noyau phénol présentait des limites dans la conduite de la réaction de polymérisation. La fonction phénol a une action inhibitrice qui limite le développement de la réaction, et qui en réduit le rendement. Ainsi malgré l'intérêt que présentent les dérivés du mercurobutol décrits dans le brevet précité, leur utilisation industrielle est limitée par cette caractéristique propre à la fonction phénol.

Or on a trouvé, et c'est ce qui fait l'objet de l'invention, des dérivés mercuriels organiques, ayant des caractéristiques antiseptiques et qui ne présentent pas la limitation constatée.

Le composé mercuriel organique selon l'invention est un dérivé de l'un des produits antiseptiques, ayant au moins un noyau benzénique, que sont le mercurobutol, le mercurophène, le mercurobutol et le mercurochrome ; de plus il comporte :

a. au moins un radical HgX dans lequel X est choisi parmi Cl, Br, I, OH, $CH_3COO$, CN, SCN, $NO_3$, $OB(OH)_2$,
b. et au moins un groupement —OR ou —COOR, lié au noyau benzénique, dans lequel R est un groupement fonctionnel capable d'intervenir dans une réaction de polymérisation ou de polyaddition.

En particulier R est un groupement allylique, vinylique ou acrylique.

Trois publications ont déjà décrit des composés mercuriels organiques qui comportent au moins un noyau benzénique, au moins un radical HgX dans lequel X est soit Cl soit $CH_3$ COO, et lié au noyau benzénique un groupement —$O-CH_2-CH=CH_2$ ou $O-CH_2-CH=CH_2-\varphi$

ou 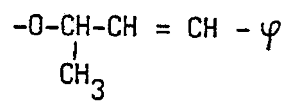

Il s'agit des trois publications suivantes : Journal of Organometallic Chemistry, vol. 225, 1982, pages 43-56 — Journal of the Chemical Society, Perkin Transactions 1, 1975, pages 2465-2471 — Tetrahedron Letters, vol. 29, no. 37, 1988, pages 4686-4690. Cependant ces composés mercuriels sont cités dans ces publications en tant que simples réactifs, aucune indication n'étant donnée quant à d'éventuelles caractéristiques antiseptiques que pourraient avoir lesdits composés.

Le composé mercuriel organique de l'invention d'une part conserve les caractéristiques antiseptiques du produit antiseptique connu dont il dérive et d'autre part ne présente pas d'action inhibitrice dans les réactions de polymérisation.

Ainsi lorsqu'il s'agit du groupement —OR, la fonction phénol est bloquée par le groupement fonctionnel et n'a plus d'action inhibitrice au cours de la réaction de polymérisation ou de polyaddition. Les dérivés possèdent les caractéristiques antiseptiques même après qu'ils aient été mis en oeuvre dans une réaction de polymérisation ou de polyaddition.

De préférence le radical HgX est lui-même lié à un noyau benzénique.

De préférence le dérivé comporte, lié à un noyau benzénique, au moins un groupement alkyl ayant un nombre de carbone inférieur ou égal à 5.

Le dérivé selon l'invention a par exemple une formule générale :

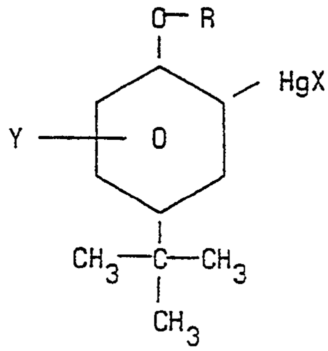

dans laquelle Y est soit H soit HgX.

Il s'agit notamment du chloromercuri-2- tertiobutyl-4 phénol allyl-éther.

C'est un autre objet de l'invention que de protéger l'utilisation des dérivés de l'invention à la protection d'un support sur lequel on a fixé par greffage au moins un desdits dérivés. Le support, par exemple un matériau polymérique textile, présente de manière permanente les caractéristiques antiseptiques du dérivé qui est fixé sur sa structure polymérique.

C'est un autre objet de l'invention que de protéger des copolymères obtenus par polymérisation d'un monomère et d'un dérivé mercuriel précité. En particulier, on retiendra le copolymère acrylique, obtenu à partir de l'acide acrylique et par polymérisation de ce monomère avec le chloromercuri-2-tertiobutyl -4 phénol allyl-éther. Le copolymère acrylique ainsi obtenu peut être mis en oeuvre dans toutes les utilisations habituelles des polymères acryliques. Il confère au produit résultant des propriétés antiseptiques.

L'invention sera mieux comprise à la lecture de la description qui va être faite du dérivé préféré de l'invention et de différents exemples d'applications.

Le dérivé mercuriel préféré de l'invention est le chloromercuri-2 tertiobutyl — 4 phénol allyl-éther. Il a comme formule :

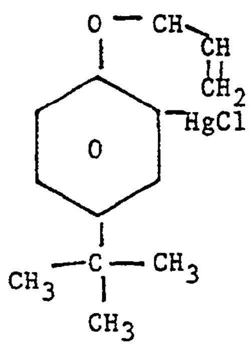

R étant, dans ce cas particulier, le groupement allyle.

Pour obtenir ce dérivé, on part du mercurobutol qui est un produit standard sur lequel on fait réagir le bromure d'allyle selon le schéma suivant :

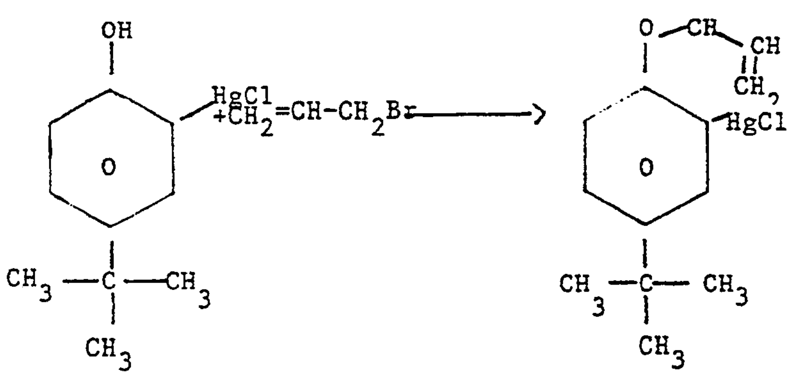

(mercurbutol) (bromure d'allyle) (chloromercuri-2-teriobutyl-4 phénol allyl-éther)

Plus précisément, on est parti de 9,3 g de mercurobutol que l'on dissout dans 50 ml d'alcool dénaturé à chaud, en présence de NaCl. On ajoute doucement 2 g de potasse. Il se forme un précipité blanc épais. On ajoute 4,4 ml de bromure d'allyle dans 21 ml d'alcool dénaturé. On mélange avec le précipité qui devient plus fluide. On laisse chauffer deux heures à la température d'ébullition de l'alcool, puis on filtre à chaud. On obtient 9,43 g de chloromercuri-2 tertiobutyl-4 phénol allyl-éther, avec un rendement de 92%. Ce produit est pur, comme on a pu le vérifier par chromatographie couche mince. Sa température de fusion est de 110°C. Il se présente sous la forme d'une poudre blanche, insoluble dans l'eau.

Le chloromercuri-2 tertiobutyl-4 phénol allyl-éther est capable d'intervenir dans une réaction de polymérisation du type radicalaire, par ouverture de sa double liaison.

Dans une première application de protection antiseptique d'un tissu de coton, on a greffé ledit tissu par un mélange d'acide acrylique et du dérivé du mercurobutol, dans les conditions suivantes. Un échantillon de coton blanchi, pesant 6,5 g est placé en atmosphère d'ozone pendant 45 minutes à la température ordinaire. On plonge le tissu dans un tube à essai contenant 200 ml d'une solution aqueuse contenant 10% d'acide acrylique et 0,01% de chloromercuri-2 tertiobutyl-4 phénol allyl-éther. On dégaze à l'azote pour chasser l'ozone en excès puis on chauffe à 100°C pendant 1 heure sous agitation. On lave ensuite à l'eau et on extrait au méthanol pendant 1 heure.

Le tissu greffé obtenu a un taux de greffage de 2,5%. Le taux de mercure est obtenu par colorimétrie à 505 nm à l'aide de la dithizone, après minéralisation de l'échantillon. Le taux de mercure est de 0,15 mg/g de tissu sec.

Pour vérifier la protection antiseptique apportée par le greffage mettant en oeuvre le dérivé du mercurobutol selon l'invention, on a utilisé la norme suisse SN 195-924 consiste à mettre en contact pendant un temps déterminé le tissu et une suspension bactérienne de Staphylococcus Auréus et d'apprécier le nombre de micro-organismes survivants après ce temps de contact (Staphylococcus Aureus référence 7625 IP, 25923 ATCC).

Le tissu de coton greffé est découpé en carrés de 1,5 cm de côté, trois carrés étant placés dans trois tubes stériles. Dans chaque tube, on verse 0,2 ml de suspension bactérienne, en milieu nutritif (à $10^6$ par ml) de Staphylococcus Aureus. On dépose la goutte sur le tissu et non sur les parois du tube. Dans le premier tube, on verse 10 ml de liquide nutritif, on place à l'étuve à 35,5°C pendant 24 heures et on observe la turbidité du liquide nutritif : le liquide est très trouble, il a la même turbidité que celle obtenue avec un échantillon témoin non greffé.

On place les deuxième et troisième tubes, après les avoir fermés stérilement, à l'étuve à 35,5°C pendant respectivement 4 et 7 jours. Puis on verse 10 ml de liquide nutritif et on replace les tubes à l'étuve 24 heures, et on observe la turbidité du liquide nutritif. Dans les deux cas, le liquide nutritif est parfaitement clair. Comparativement, le liquide nutritif avec l'échantillon témoin non traité est très trouble.

De ces expériences, on peut faire les constatations suivantes : dans le premier tube, le tissu greffé à l'aide de chloromercuri-2 tertiobutyl-4 phénol allyl-éther n'a pas eu le temps de jouer son rôle antiseptique.

Dans les deux autres tubes, après 4 et 7 jours de contact, le tissu a inhibé la croissance bactérienne. Le coton non greffé n'a pas de propriété antiseptique.

Dans une seconde application de protection antiseptique d'un tissu en fibres de polychlorure de vinyle, on a greffé ledit tissu par un mélange d'acide acrylique et du dérivé du mercurobutol dans les conditions suivantes. Les essais ont été réalisés en tubes Pyrex® bouchés, agités en étuve régulée. Les échantillons sont désensimés par un lavage en milieu alcalin. Après séchage, les échantillons sont traités à l'ozone 1 heure à 25°C puis plongés dans les tubes à essais contenant la solution de greffage (15% en acide acrylique ; de 0,015 à 0,050% en chloromercuri-2 tertiobutyl-4 phénol allyl-éther). Le greffage s'effectue à la température de 80-90°C pendant une heure (rapport de bain : 1/20). Le taux de greffage et le taux de mercure sont mesurés après lavage à l'eau douce et séchage : taux de greffage 5 à 10% ; taux de mercure de 1,5 à 4 mg/g par rapport au poids sec du tissu.

Les échantillons ainsi greffés ont subi 5 cycles de lavage de 30 minutes à 50°C, avec une concentration de 2,4 g de lessive par litre d'eau adoucie. Le rapport de bain était de 1/40. Le bain était renouvelé à chaque cycle. Il n'est pas constaté de diminution du taux de greffage ni du taux de mercure.

Des essais microbiologiques en boîte de Pétri sont réalisés sur trois tissus de polychlorure de vinyle. Le premier non greffé qui sert de témoin, le deuxième greffé à l'aide du dérivé de l'invention comme il est dit ci-dessus, le troisième greffé après 5 lavages à 50°C pendant 30 minutes (2,4 g /l de lessive). La souche mise en oeuvre est Escherichia Coli (références 7624 IP, 25922 ATC). Le milieu gélosé se compose en g/l d'eau distillée à pH 7,4 de 300 g d'infusion de viande de boeuf, de 17,5 g de Biocase, de 1,5 g d'amidon, de 17 g de gélose.

La gélose est déposée dans une boite de Pétri standard 90 × 15 mm sur une épaisseur uniforme de 4 mm.

La gélose ainsi déposée est ensemencée à l'aide d'une suspension de germes ($10^6$ germes/ml ; volume de suspension utilisé = 0,5 ml). On dépose stérilement un carré de tissu soigneusement extrait au méthanol.

Chaque germe déposé sur la gélose se développe pour donner naissance, lors de l'étuvage à 35,5°C à une colonie circulaire de couleur blanchâtre.

Après étuvage, on observe la préparation à la loupe binoculaire. A la périphérie du tissu, les colonies se sont développées normalement. Sous le tissu, les résultats diffèrent selon les trois tissus :

- le tissu témoin, non greffé, mais lavé à la lessive pour éliminer une grande partie des microorganismes présents, ne présente pas d'activité antimicrobienne (développement normal sous le tissu et absence de zone d'inhibition autour du tissu),
- le tissu greffé extrait au méthanol, présente une activité antimicrobienne très nette : absence totale de colonies sous le tissu, avec une très faible zone d'inhibition à la périphérie du tissu (0,1 à 0,5 mm),
- les tissus greffés, extraits au méthanol, puis lavés 5 fois présentent les mêmes propriétés antimicrobiennes que le deuxième tissu.

A partir des essais décrits ci-dessus, on peut faire l'interprétation suivante des résultats obtenus.

La présence de colonies à l'extérieur du tissu signifie que l'antiseptique ne diffuse pas dans la gélose. Sous le tissu et dans une zone de 0,1 à 0,5 mm (dite zone d'inhibition) autour du tissu, il n'y a pas de développement de colonies. Cela signifierait que les bactéries sont inhibées par contact avec les principes actifs présents sur les tissus.

La fixation par greffage du dérivé mercuriel sur un support n'est pas limitée à la mise en oeuvre de l'acide acrylique. On donne ci-après deux autres exemples de greffage d'une pièce de coton blanchi.

Une première pièce de coton blanchi est irradiée à 2 Mrad par bombardement électronique puis immergée dans une solution de 28,5 g de méthacrylate de morpholinoéthyl, 375 ml d'alcool, 350 mg de chloromercuri-2 tertiobutyl-4 phénol allyl-éther et 40 ml d'eau. Après 15 mn d'agitation à froid, la pièce est lavée et extraite à l'alcool. Le gain de poids est de 5,3%, le taux de mercure de 0,20 mg/g.

Une seconde pièce de coton blanchi est irradiée à 2 Mrad par bombardement électronique puis immergée dans une solution de 25 g de méthacrylate de diméthyl-amino éthyl, 350 mg de chloromercuri-2 tertiobutyl-4 phénol allyl-éther et 100 ml d'eau. Après 15 mn d'agitation à froid, la pièce est lavée et extraite à l'alcool. Le gain de poids est de 4%, le taux de mercure de 0,17 mg/g.

Les dérivés mercuriels selon l'invention peuvent grâce au groupement R intervenir comme réactifs dans des polymérisations ou polyadditions. Ils peuvent donc être agents de synthèse de copolymère ayant des propriétés antiseptiques.

On a ainsi préparé un copolymère acrylique par polymérisation de l'acide acrylique et du chloromercuri-2 tertiobutyl-4 phénol allyl-éther. La polymérisation est effectuée dans un réacteur de 1 l équipé d'un réfrigérant ascendant, d'un agitateur à ailettes de 210 W et d'un bain-marie à huile. On introduit d'abord 900 mg de chloromercuri-2 tertiobutyl-4 phénol allyl-éther dissous dans 10 ml d'acide acétique. Puis, dans le mélange chauffé à 110°C, on ajoute lentement une solution d'acide acrylique à 90% (49,5 ml) (fraîchement distillé) avec 750 mg de Peroxyde de Benzoyle et 30 ml d'acide acétique. L'addition dure 70 minutes. Au cours de cette addition, on ajoute dans le réacteur 10 ml d'acide acétique.

Après l'addition, on chauffe encore 10 minutes sous agitation énergique. Puis, après refroidissement, on place le copolymère dans un ballon de 1 litre équipé d'un rodage et on évapore sous vide l'acide acétique, l'acide acrylique non polymérisé et l'eau. On ajoute de l'eau distillée dans le ballon pour obtenir un copolymère liquide de masse totale 356,1 g dont 45 g de matière sèche ; ceci correspond à 0,12% en mercure dans le copolymère liquide.

On imprègne de façon homogène un tissu de polyamide à l'aide du copolymère obtenu. Après séchage, pesée et dosage de l'antiseptique (1,1 mg de mercure/g de polyamide), on découpe des morceaux de tissus que l'on immerge dans des tubes de suspensions bactériennes d'Escherichia Coli : 7624 IP, 25922 ATCC dans du liquide nutritif viande-foie-glucose.

On agite les tubes dans une étuve à 35,5°C. On prélève un aliquot de la suspension dès l'immersion des morceaux de tissu (temps = 0) puis après 24 heures d'agitation (temps = 24 h). Sur les prélèvements on fait un dénombrement des bactéries.

TABLEAU 1

| Essai N° | Poids de tissu (mg) | Quantité de mercure (µg / ml) | Concentration bactérienne (nb de bactéries / ml) | | |
|---|---|---|---|---|---|
| | | | t = 0 | t = 24h avec tissu | t = 24h sans tissu |
| 1 | 162 | 17,8 | 50 | 0 | 5 à 6·$10^8$ |
| 2 | 195 | 21,4 | 300 | 0 | trop concentré |
| 3 | 134 | 14,7 | 1.080 | 0 | " |
| 4 | 129 | 14,2 | 9.700 | 0 | " |
| 5 | 149 | 16,4 | $10^5$ | 0 | " |
| 6 | 135 | 14,8 | $10^6$ | 0 | " |

Le tableau 1 ci-dessus donne, pour 6 essais différents, les concentrations de la suspension bactérienne, au temps zéro et après 24 heures d'agitation, en présence du tissu imprégné du copolymère selon l'invention et sans tissu. Quelle que soit la concentration initiale de la suspension bactérienne, l'activité antiseptique du copolymère est suffisante pour qu'il n'y ait plus de bactéries dans la solution après 24 heures d'agitation.

L'invention n'est pas limitée à l'exemple qui vient d'être largement décrit. En particulier le produit technique, comprenant le mercurobutol, peut parfois être un mélange de mercurobutol et de di-mercurobutol de formule

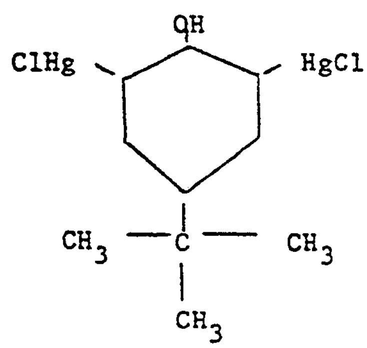

Dans ce cas, la préparation décrite ci-dessus et faisant intervenir le bromure d'allyle conduit à l'obtention d'un mélange de deux dérivés de l'invention, comportant le premier un seul radical HgCl lié au noyau benzénique et le second deux radicaux HgCl liés au noyau benzénique. Ce mélange mis en oeuvre par greffage apporte au tissu greffé une protection antiseptique du même type que celle conférée par le seul chloromercuri-2 tertiobutyl-4 phénol allyl-éther.

D'autre part il est possible d'obtenir facilement d'autres dérivés de l'invention, à partir de produits antiseptiques mercuriels connus, autres que le mercurobutol, par exemple le mercurophène, le mercurosal, le mercurochrome. Tous ces produits comportent dans leur formule au moins un noyau benzénique, au moins un radical HgX, dans lequel X est
OH et, lié au noyau benzénique, au moins un groupement O-R ou COOR. Ainsi par exemple il suffit de faire réagir sur le produit mercuriel retenu un halogénure d'allyle afin d'obtenir le dérivé de l'invention dans lequel le groupement —OR sera le groupement — $O - CH = CH - CH_2$.

Les dérivés obtenus conservent, même après polymérisation ou polyaddition du groupement R, des propriétés antiseptiques des dérivés mercuriels à partir desquels ils ont été obtenus.

## Revendications

1. Composé antiseptique mercuriel, dérivé de l'un des produits antiseptiques, ayant au moins un noyau benzénique, que sont le mercurobutol, le mercurophène, le mercurosal et le mercurochrome, comportant :

a. au moins un radical HgX dans lequel X est choisi parmi Cl, Br, I, OH, $CH_3COO$, CN, SCN, $NO_3$, OB $(OH)_2$,

b. et au moins un groupement —OR ou —COOR, lié au noyau benzénique, dans lequel R est un groupement fonctionnel capable d'intervenir dans une réaction de polymérisation ou de polyaddition.

2. Composé selon la revendication 1 caractérisé en ce que R est un groupement allylique, vinylique ou acrylique, notamment le groupement allyle.

3. Composé selon la revendication 1 caractérisé en ce que le radical HgX est lié au noyau benzénique.

4. Composé selon la revendication 1, dérivé du mercurobutol, de formule générale

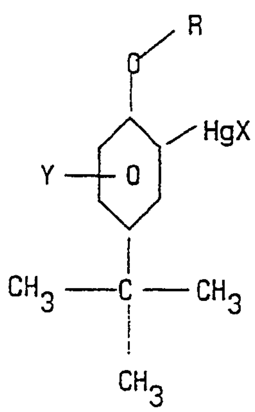

dans laquelle Y est H ou HgX.

5. Procédé de fabrication du composé selon la revendication 2 dans lequel R est le groupement allyle, caractérisé en ce qu'il consiste à faire agir un halogénure d'allyle sur le produit antiseptique connu : mercurobutol, mercurophène, mercurosol ou mercurochrome.

6. Procédé selon la revendication 5 caractérisé en ce que, le produit antiseptique étant le mercurobutol, il consiste à faire agir le bromure d'allyle sur le mercurobutol.

7. Application du composé mercuriel selon l'une des revendications 1 à 4 à la protection d'un support polymérique caractérisée en ce que ledit dérivé est fixé par greffage sur ledit support.

8. Copolymère ayant des propriétés antiseptiques, caractérisé en ce qu'il est obtenu par copolymérisation d'un monomère et d'un composé mercuriel selon l'une des revendications 1 à 4.

9. Copolymère selon la revendication 8 caractérisé en ce qu'il est obtenu par copolymérisation de l'acide acrylique et du chloromercuri-2 tertiobutyl-4 phénol allyl-éther.

## Claims

1. Mercurial antiseptic compound, derivative of one of the antiseptic products having at least one benzene ring, which are mercurobutol, mercurophene, mercurosol and mercurochrome, comprising :

a) at least one radical HgX in which X is selected from Cl, Br, I, OH, $CH_3$ COO, CN, SCN, $NO_3$, OB $(OH)_2$,

b) and, bonded to a benzene ring, at least one group —OR or —COOR in which R is a functional group capable of intervening in a reaction of polymerization or of polyaddition.

2. Compound according to claim 1, characterized in that R is an allyl, vinyl or acrylic group, and particularly the allyl group.

3. Compound according to claim 1, characterized in that the radical HgX is bonded to the benzene ring.

4. Compound according to claim 1, derivative of mercurobutol, of the general formula :

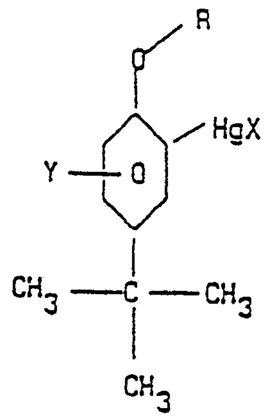

in which Y is H or HgX.

5. Process for the preparation of the compound according to claim 2, in which R is the allyl group, characterized in that it consists in reacting an allyl halogenide on the known antiseptic product : mercurobutol, mercurophene, mercurosol or mercurochrome.

6. Process according to claim 5, characterized in that the antiseptic product being mercurobutol, it consists in reacting allyl bromide with mercurobutol.

7. Application of the mercurial compound according to one of claims 1 to 4, to the protection of a polymeric support, characterized in that said derivative is fixed by grafting on said support.

8. Copolymer having antiseptic properties, characterized in that it is obtained by copolymerization of a monomer and of a mercurial compound according to one of claims 1 to 4.

9. Copolymer according to claim 8, characterized in that it is obtained by copolymerization of acrylic acid and of 2-chloromercuri 4-tertiobutyl phenol allyl-ether.

## Patentansprüche

1. Antiseptische Quecksilberverbindungen, die Derivate von antiseptischen Verbindungen mit mindestens einem Benzolring darstellen, wie Mercurobutol, Mercurophen, Mercurosal und Mercurochrom, und aufweisen:

a. mindestens eine Gruppe HgX, in der X unter Cl, Br, I, OH, $CH_3COO$, CN, SCN, $NO_3$ und $OB(OH)_2$ ausgewählt ist, und

b. mindestens eine Gruppe —OR oder —COOR, die an den Benzolring gebunden ist, wobei R eine funktionelle Gruppe darstellt, die einer Polymerisations- oder Polyadditionsreaktion zugänglich ist.

2. Verbindungen nach Anspruch 1, dadurch gekennzeichnet, daß R eine Allylgruppe, eine Vinylgruppe oder eine Allylgruppe und insbesondere Allyl darstellt.

3. Verbindungen nach Anspruch 1, dadurch gekennzeichnet, daß die Gruppe HgX an den Benzolring gebunden ist.

4. Verbindungen nach Anspruch 1, die Derivate des Mercurobutols der allgemeinen Formel darstellen,

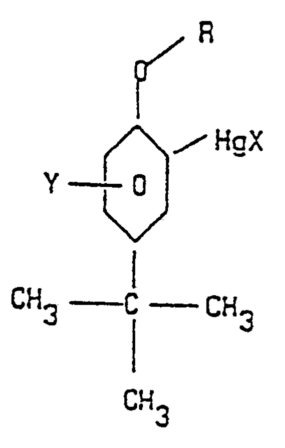

,

in der Y H oder HgX bedeutet.

5. Verfahren zur Herstellung der Verbindungen nach Anspruch 2, bei denen R Allyl darstellt, dadurch gekennzeichnet, daß ein Allylhalogenid mit einer der bekannten Verbindungen Mercurobutol, Mercurophen, Mercurosal oder Mercurochrom umgesetzt wird.

6. Verfahren nach Anspruch 5, dadurch gekennzeichnet, daß im Fall der antiseptischen Verbindung Mercurobutol, Allylbromid mit Mercurobutol umgesetzt wird.

7. Verwendung der Quecksilberverbindungen nach einem der Ansprüche 1 bis 4 zum Schutz eines polymeren Trägers, dadurch gekennzeichnet, daß das entsprechende Derivat durch Pfropfung am Träger fixiert wird.

8. Copolymere mit antiseptischen Eigenschaften, dadurch gekennzeichnet, daß sie durch Copolymerisation eines Monomers mit einer Quecksilberverbindung nach einem der Ansprüche 1 bis 4 erhalten sind.

9. Copolymere nach Anspruch 8, dadurch gekennzeichnet, daß sie durch Copolymerisation von Acrylsäure mit 2-Chlormercuri-4-t-butylphenylallylether erhalten sind.